# EUROPÄISCHE PATENTSCHRIFT

(11) **EP 3 996 298 B1**
(45) Veröffentlichungstag und Bekanntmachung des Hinweises auf die Patenterteilung: **04.06.2025**
(21) Anmeldenummer: 21206383.8
(22) Anmeldetag: 04.11.2021
(51) Int. Cl.: H04J 3/06

(54) **ZEITSYNCHRONISATION IN EINEM ECHTZEIT-NETZWERK**
TIME SYNCHRONIZATION IN A REAL-TIME NETWORK
SYNCHRONISATION TEMPORELLE DANS UN RÉSEAU EN TEMPS RÉEL

(30) Priorität: 06.11.2020 AT 509562020
(43) Veröffentlichungstag der Anmeldung: 11.05.2022
(73) Patentinhaber: ABB Schweiz AG, 5400 Baden (CH)
(72) Erfinder: Weber, Horst, 5142 Eggelsberg (AT); Meisl, Franz, 5142 Eggelsberg (AT)
(74) Vertreter: Patentanwälte Pinter & Weiss OG

(56) Entgegenhaltungen:
- WO-A1-2017/034898
- MEIER S ET AL: "IEEE 1588 syntonization and synchronization functions completely realized in hardware", 2008 IEEE INTERNATIONAL SYMPOSIUM ON PRECISION CLOCK SYNCHRONIZATION FOR MEASUREMENT, CONTROL AND COMMUNICATION IEEE PISCATAWAY, NJ, USA,, 22 September 2008 (2008-09-22), pages 1 - 4, XP002636158, ISBN: 978-1-4244-2275-3
- DEPARI A ET AL: "Multi-probe measurement instrument for real-time ethernet networks", FACTORY COMMUNICATION SYSTEMS, 2006 IEEE INTERNATIONAL WORKSHOP ON JUNE 27, 2006, PISCATAWAY, NJ, USA,IEEE, PISCATAWAY, NJ, USA, 1 January 2006 (2006-01-01), pages 313 - 320, XP031741910, ISBN: 978-1-4244-0379-0
- GRAMANN T ET AL: "PRECISION TIME PROTOCOL IEEE 1588 IN DER PRAXIS ZEITSYNCHRONISATION IM SUBMIKROSEKUNDENBEREICH", ELEKTRONIK, W E K A FACHZEITSCHRIFTEN-VERLAG GMBH, DE, vol. 52, no. 24, 25 November 2003 (2003-11-25), pages 86, XP001177441, ISSN: 0013-5658
- PAOLO FERRARI ET AL: "On the Seamless Interconnection of IEEE1588-Based Devices Using a PROFINET IO Infrastructure", IEEE TRANSACTIONS ON INDUSTRIAL INFORMATICS, IEEE SERVICE CENTER, NEW YORK, NY, US, vol. 6, no. 3, 1 August 2010 (2010-08-01), pages 381 - 392, XP011312327, ISSN: 1551-3203
- GUTIERREZ MARINA ET AL: "Synchronization Quality of IEEE 802.1AS in Large-Scale Industrial Automation Networks", 2017 IEEE REAL-TIME AND EMBEDDED TECHNOLOGY AND APPLICATIONS SYMPOSIUM (RTAS), IEEE, 18 April 2017 (2017-04-18), pages 273 - 282, XP033105027, DOI: 10.1109/RTAS.2017.10

## Beschreibung

Die gegenständliche Erfindung betrifft ein Verfahren zum Synchronisieren der jeweiligen lokalen Netzzeit von Teilnehmern eines Echtzeit-Netzwerks, wobei die Teilnehmer über Ports miteinander verbunden sind, wobei die Teilnehmer, vorzugsweise zyklisch, jeweils Synchronisationspakete an verbundene Teilnehmer übermitteln, wobei ein Teilnehmer des Echtzeit-Netzwerks als Synchronisationsmaster bestimmt wird, wobei unter Verwendung der Synchronisationspakete die lokale Netzzeit der weiteren Teilnehmer auf die lokale Netzzeit des Synchronisationsmasters synchronisiert wird.

Es können zentrale Recheneinheiten, Bus-Module, Antriebsmodule, Bus-Koppler, IO-Module mit integrierter Netzwerk-Anbindung, Kamera, HMI-Geräte, Netzwerkintegrierte Sensoren und Aktoren, Netzwerk-Infrastruktur (Switches, Bridges etc.) als Teilnehmer eines Echtzeit-Netzwerks vorgesehen sein. Die Teilnehmer haben jeweils eine lokale Zeit, welche pro Teilnehmer durch einen Zähler bestimmt wird, wobei die Zähler jedoch aufgrund von Oszillatortoleranzen nicht synchron zueinander sind. Um beispielsweise in Steuerungssystemen eine Interaktion von Teilnehmern eines Echtzeit-Netzwerks mit physikalischen Prozessen zu ermöglichen, benötigen die Teilnehmer allerdings eine gemeinsame Zeitdomäne. Damit kann eine präzisere und schnellere Steuerung von Prozessen im Echtzeit-Netzwerk gewährleistet werden. Als physikalische Prozesse können beispielsweise Bewegungen von Maschinenteilen oder Gütern z.B. auf einer Maschine ablaufen. Die physikalischen Prozesse werden von als Aktoren ausgelegten Teilnehmern initiiert und von als Sensoren ausgelegten Teilnehmern erfasst.

Somit kann für die Teilnehmer jeweils eine lokale Netzzeit vorgesehen sein, welche von der lokalen Zeit abgeleitet wird. Diese lokalen Netzzeiten der Teilnehmer müssen jedoch aufgrund von Oszillatortoleranzen der jeweiligen Zähler wiederum auf einige hundert Millisekunden bis Nanosekunden genau zueinander synchronisiert werden. Hierzu sind aufwändige Synchronisationsverfahren bekannt, die auf umfangreichen Software-Stacks basieren, wie es beispielsweise im PTP-Protokoll vorgesehen ist. Derartige Verfahren erfordern jedoch eine entsprechend hohe Prozessorleistung der Teilnehmer. Es sind hingegen auch einfachere Synchronisationsverfahren bekannt, insbesondere bei Echtzeit-Netzwerken, welche in Master und Slaves eingeteilt sind. Die Rollenaufteilung in Master und Slaves beziehen sich auf einen Großteil oder die gesamte Kommunikation im Echtzeit-Netzwerk und sind fest vorgegeben und somit nicht oder nur über Umwege veränderbar. Dem vorab festgelegten Kommunikations-Master wird zudem eine Rolle als Synchronisations-Master zugeteilt. Dieser Synchronisations-Master sendet ein Synchronisationssignal an alle Teilnehmer aus, um die lokalen Zeiten der Teilnehmer auf die globale Zeit zu synchronisieren. Dabei wird vom Master ein definierter Teil des vorhandenen Netzwerkprotokolls, beispielsweise ein erkannter Frame-Anfang, verwendet, um die globale Zeit zu bestimmen. Bekannte einfache Synchronisationsverfahren werden in den Netzwerkprotokollen Powerlink, X2X, Sercos und EtherCat verwendet. Diese einfachen Synchronisationsverfahren stellen geringere Anforderungen an die Prozessorleistung, weisen allerdings auch einen geringeren Funktionalitätsumfang auf und sind natürlich ungenauer als komplexe Synchronisationsverfahren. Beispielsweise ist bei bekannten einfachen Synchronisationsverfahren keine Signallaufzeit-Kompensation möglich. Bekannte Synchronisationsverfahren basieren auf Software, womit sie erst nach dem Start des Netzwerks aktiv werden können. Ein Echtzeitbetrieb ist daher erst nach einer erfolgten Synchronisation möglich, womit die Zeit bis zur ersten Synchronisation durch die Startdauer der Software limitiert wird.

GB 2426164 A, US 7447931 B1, WO 2016015769, EP 3016306 A1, WO 2005/119951 A1 offenbarten Zeitsynchronisation, wobei ein Master an alle verbundenen Slaves ein Synchronisationspaket sendet, um eine Zeitsynchronisation durchzuführen. Folglich schickt ein Master eine Synchronisationspaket und broadcastet dieses zu allen Slaves in einem Netzwerk. Auch sind im Stand der Technik Ausfallsmaster beschrieben, welche bei Ausfall die Rolle des alten Masters übernehmen. Jedoch wird nirgends ein Synchronisationspfad beschrieben.

EP 2544389 A1 offenbart eine Zeitsynchronisation, wobei ein Zeit-Sync-Master, von einem Takt-Sync Master in einer untergeordneten Domain unterstützt wird. Die Synchronisation der Slaves einer Domain erfolgt entlang eines Synchronisationspfades, jedoch wird bei Übertragung entlang des Synchronisationspfades der Arbeitstakt und der Zeittakt der beiden Master unverändert weitergegeben und jeder Slave errechnet sich daraus die Differenz zu seiner Uhrzeit.

Weiterer relevanter Stand der Technik wird offenbart durch MEIER S ET AL: "IEEE 1588 syntonization and synchronization functions completely realized in hardware", 2008 IEEE INTERNATIONAL SYMPOSIUM ON PRECISION CLOCK SYNCHRONIZATION FOR MEASUREMENT, CONTROL AND COMMUNICATION IEEE PISCATAWAY, NJ, USA, 22. September 2008 (2008-09-22), Seiten 1-4, ISBN: 978-1-4244-2275-3.

Es ist eine Aufgabe der gegenständlichen Erfindung eine verbesserte Synchronisation von Teilnehmern eines Echtzeit-Netzwerks anzugeben.

Die Erfindung wird definiert durch die unabhängigen Ansprüche.

Diese Aufgabe wird gelöst, dadurch dass unter Verwendung der Synchronisationspakete ausgehend vom Synchronisationsmaster entlang eines Synchronisationspfads die lokale Netzzeit der entlang des Synchronisationspfads befindlichen Teilnehmer auf die lokale Netzzeit des Synchronisationsmasters synchronisiert wird, und dass die Teilnehmer zum Zeitpunkt des Absendens des jeweiligen Synchronisationspakets einen Zeitstempel ihrer lokalen Zeit mit dem Synchronisationspaket übertragen, und dass die Teilnehmer für einen Port, über welchen ein Synchronisationspaket wird, eine Differenzzeit aus einer Differenz des im Synchronisationspaket empfangenen Zeitstempels und eines Zeitstempels ihrer lokalen Zeit beim Empfang des betreffenden Synchronisationspaket berechnen, wobei die lokale Netzzeit der Teilnehmer unter Verwendung der Differenzzeit synchronisiert wird.

Das erfindungsgemäße Verfahren kann in einfacher Weise an den Teilnehmern in Hardware (z.B. in einem ASIC oder einem FPGA - Field Programmable Gate Array ein integrierter Schaltkreis (IC) der Digitaltechnik, in welchen eine logische Schaltung geladen werden kann) implementiert werden und ermöglicht dennoch eine genauere Synchronisation der lokalen Zeiten der Teilnehmer als beispielsweise im X2X-Protokoll vorgesehen ist. Dennoch ist der Aufbau des erfindungsgemäßen Verfahrens wesentlich weniger aufwendig als z.B. im vergleichbar genauen PTP-Synchronisationsverfahren. Somit kann bei vergleichbarer Synchronisationsgenauigkeit Overhead eingespart werden oder bei vergleichbarem Overhead eine höhere Synchronisationsgenauigkeit erreicht werden. Vorzugsweise übertragen die Teilnehmer zum Zeitpunkt des Absendens des jeweiligen Synchronisationspakets einen Zeitstempel ihrer lokalen Zeit mit dem Synchronisationspaket. Die Teilnehmer berechnen für einen Port, über welchen ein Synchronisationspaket empfangen wird, eine Differenzzeit aus einer Differenz des im Synchronisationspaket empfangenen Zeitstempels und eines Zeitstempels ihrer lokalen Zeit beim Empfang des betreffenden Synchronisationspakets. Für einen Port, über welchen kein Synchronisationspaket empfangen wird, wird keine Differenzzeit berechnet. Die lokale Netzzeit der Teilnehmer wird weiters unter Verwendung der jeweiligen Differenzzeiten auf die lokale Netzzeit des Synchronisationsmasters synchronisiert.

Vorzugsweise wird ausgehend vom Synchronisationsmaster ein über die weiteren Teilnehmer verlaufender Synchronisationspfad vorgegeben, wobei die lokale Netzzeiten der weiteren Teilnehmer entlang des Synchronisationspfads auf die lokale Netzzeit des Synchronisationsmasters synchronisiert werden.

Ist das Echtzeit-Netzwerk linear und ist ein Teilnehmer an einem Ende des Echtzeit-Netzwerks als Synchronisationsmasters vorgesehen, dann kann der Synchronisationspfad als Synchronisationsrichtung angesehen werden. Ist das Echtzeit-Netzwerk linear und ist ein Teilnehmer inmitten (d.h. nicht an einem Ende) des Echtzeit-Netzwerks als Synchronisationsmasters vorgesehen, dann verläuft der Synchronisationspfad in zwei Synchronisationsrichtungen (ausgehend vom Synchronisationsmaster). Ist das Echtzeit-Netzwerk verzweigt und ist ein Teilnehmer, welcher die Verzweigung bildet, als Synchronisationsmasters vorgesehen, dann verläuft der Synchronisationspfad in drei oder mehr (je nach Art der Verzweigung) Synchronisationsrichtungen (ausgehend vom Synchronisationsmaster).

Es können in einem Echtzeit-Netzwerk auch mehrere Teilnehmer als Synchronisations-Master bestimmt werden, wobei für jeden Master ein zugehöriger Synchronisationspfad vorgesehen ist.

Vorteilhafterweise übertragen die Teilnehmer mit dem Synchronisationspaket jeweils eine Netzzeitabweichung eines ihrer anderen Ports. Die Teilnehmer berechnen die Netzzeitabweichung der Ports, über welche ein Synchronisationspaket empfangen wird, jeweils aus Summe der berechneten Differenzzeit und einer im Synchronisationspaket empfangenen Netzzeitabweichung.

Weist ein Teilnehmer zwei Ports auf, so übermittelt er über einen Port die Netzzeitabweichung des anderen Ports. Weist ein Teilnehmer mehr als zwei Ports auf, so wird vorgegeben, von welchen/m Port(s) an welche(n) Port(s) die Netzzeitabweichung weitergeleitet wird. Ist ein Synchronisationspfad bekannt, so kann der Synchronisationspfad vorgeben welche(r) Port(s) welchen/m Port(s) zur Weiterleitung der Netzzeitabweichung zugeordnet werden, wobei die Netzzeitabweichung entlang und entgegen des Synchronisationspfads weitergeleitet werden kann.

Vorzugsweise überträgt der Synchronisationsmaster entlang des Synchronisationspfads mit dem Synchronisationspaket jeweils eine vorgegebene Netzzeitabweichung. Dies kann auch dermaßen interpretiert werden, dass dem Synchronisationsmaster für Ports, welcher entgegen des Synchronisationspfads angeordnet sind, eine Netzzeitabweichung vorgegeben wird, welche dann über den Port entlang des Synchronisationspfads übertragen wird. Die Teilnehmer berechnen ihre lokale Netzzeit aus der Differenz ihrer lokalen Zeit und der Netzzeitabweichung des entgegen des Synchronisationspfads angeordneten Ports.

Da der Synchronisationspfad vom Synchronisationsmaster ausgeht, wird der Port, welcher nicht in Richtung des Synchronisationspfads liegt, als "entgegen des Synchronisationspfads angeordnet" angesehen, und bekommt vorzugsweise eine Netzzeitabweichung, vorzugsweise null, vorgegeben. Für Ports über welche kein Synchronisationspaket empfangen wird, wird eine Netzzeitabweichung von null vorgegeben.

Für den entgegen des Synchronisationspfads angeordneten Ports des Synchronisationsmasters gilt die zuvor vorgegebene Netzzeitabweichung, welche natürlich auch null sein kann.

Der Synchronisationspfad gibt also vor, entlang welcher Teilnehmer und Ports die lokale Netzzeit synchronisiert wird.

Die Teilnehmer können die Netzzeitabweichung der Ports, über welche ein Synchronisationspaket empfangen wird, um eine Signallaufzeit des empfangenen Synchronisationspakets korrigieren.

Hierzu können die Teilnehmer jeweils die Differenzzeit der Ports, über welche das jeweilige Synchronisationspaket gesendet wird, mit dem Synchronisationspaket übermitteln. Die Teilnehmer können weiters die Signallaufzeit des empfangenen Synchronisationspakets aus der mit dem Synchronisationspaket empfangenen Differenzzeit und der Differenzzeit des Ports, über welchen das Synchronisationspaket empfangen wird, berechnen, vorzugsweise aus der halbierten Differenz der empfangenen Differenzzeit und der Differenzzeit des Ports, über welchen das Synchronisationspaket empfangen wird.

Die Differenzzeit kann durch die Teilnehmer jeweils gefiltert werden. Damit können Messungenauigkeiten und Quantisierungseffekte reduziert werden.

Weiters können die Teilnehmer jeweils aus einer aktuellen Netzzeitabweichung in einem aktuellen Zyklus und einer Netzzeitabweichung aus einem vorhergehenden Zyklus eine Netzzeitabweichungsdifferenz berechnen und vorzugsweise filtern, wobei die berechnete und vorzugsweise gefilterte Netzzeitabweichungsdifferenz zur aktuellen Netzzeitabweichung im aktuellen Zyklus addiert wird, um eine korrigierte Netzzeitabweichungsdifferenz zu erhalten, und die korrigierte Netzzeitabweichungsdifferenz die ursprüngliche aktuellen Netzzeitabweichung ersetzt. Hiermit können Abweichungen der synchronisierten Netzzeit aufgrund von Oszillatortoleranzen kompensiert werden.

Vorzugsweise wird bei Wegfall des festgelegten Synchronisationsmasters ein anderer Teilnehmer als neuer Synchronisationsmaster festgelegt. Dies kann explizit oder implizit, d.h. automatisiert, erfolgen. Es kann aber ausgehend vom neuen Synchronisationsmaster ein neuer Synchronisationspfad festgelegt werden. Insbesondere wenn ein Synchronisationsmaster an einem Ende des Echtzeit-Netzwerks ausfällt, kann auch der nunmehr am Ende befindliche Teilnehmer als Synchronisationsmaster dienen. Da sich dabei der Synchronisationspfad nicht ändert, berechnen die Teilnehmer weiterhin ihre lokale Netzzeit aus der Differenz ihrer lokalen Zeit und der Netzzeitabweichung eines entgegen des Synchronisationspfads angeordneten Ports, welcher sich somit ebenso nicht ändert. Damit bleibt das Echtzeit-Netzwerk weiterhin synchron, auch wenn der vormalige Synchronisationsmaster wegfällt. Es kann im Betrieb auch grundlegend (d.h. auch ohne Ausfall des vormaligen Synchronisationsmasters) ein anderer Teilnehmer als Synchronisations-Master festgelegt werden, was beispielsweise für einen Wechsel eines Betriebsmodus im Echtzeit-Netzwerk erforderlich sein kann.

Vorzugsweise wird das Synchronisationspaket jeweils im ISO-OSI-Layer 2 übertragen. Damit wird ein besonders geringer Overhead erzeugt.

Vorzugweise sind die Teilnehmer des Echtzeit-Netzwerks linear miteinander verbunden. Das Echtzeit-Netzwerk kann jedoch auch einen nicht-linearen Aufbau, z.B. einen verzweigten oder ringförmigen Aufbau, aufweisen. Ein verzweigter Aufbau unterscheidet sich von einem linearen Aufbau dadurch, dass es auch Teilnehmer gibt, die nicht nur einen oder zwei benachbarte Teilnehmer aufweisen, sondern auch drei oder mehr benachbarte Teilnehmer.

Das Echtzeit-Netzwerk kann ein X2X+ Netzwerk darstellen. X2X+ ist ein serielles Echtzeit-Netzwerk, dessen Teilnehmer über Switches miteinander verbunden sind. Diese Switches sind in der Regel X20-Bus-Module, welche hintereinander gesteckt werden, könnten aber auch anders ausgeführt werden. Eine Datenübertragung in einem X2X+-Echtzeit-Netzwerk entspricht dem Standard LVDS (Low Voltage Differential Signaling), einem Schnittstellen-Standard für Hochgeschwindigkeits-Datenübertragung. Die Datenrate ist mit 512 Mbps sehr hoch und es wird kein Taktsignal übertragen. Aus diesem Grund wird beim Empfänger des Signals eine Wiederherstellung des Taktsignals durchgeführt.

Das Synchronisationspaket kann einen oder mehrere Frames mit

Synchronisationsinformation umfassen. Das Synchronisationspaket kann in einem Management-Frame übertragen werden, da der zugehörige Management Kanal die höchste Priorität hat und ein Kanal von einem mit höherer Priorität unterbrochen werden kann. Vorzugsweise wird alle 4 µs ein Management-Frame mit einem Synchronisationspaket erzeugt. Dabei kann ein Zeitstempel der lokalen Zeit das Start-of-Management-Symbol generiert werden. Das Ende des Management-Frames wird durch das End-of-Management-Symbol gekennzeichnet.

Es kann anstelle eines linearen Echtzeit-Netzwerks auch ein verzweigtes Echtzeit-Netzwerk vorgesehen sein. Dabei kann die Synchronisationsrichtung verzweigt sein, um alle Teilnehmer durch Synchronisationspakete zu erreichen.

Die gegenständliche Erfindung wird nachfolgend unter Bezugnahme auf die Figuren 1a bis 2c näher erläutert, die beispielhaft, schematisch und nicht einschränkend vorteilhafte Ausgestaltungen der Erfindung zeigen. Dabei zeigt
Fig.1a ein lineares Echtzeit-Netzwerk umfassend drei Teilnehmer
Fig.1b das lineare Echtzeit-Netzwerk mit einem Synchronisations-Master am Ende des Echtzeit-Netzwerks,
Fig.1c das lineare Echtzeit-Netzwerk mit einem Synchronisations-Master inmitten des Echtzeit-Netzwerks,
Fig.2a eine bevorzugte Ausgestaltung des Echtzeit-Netzwerks aus Fig. 1a,
Fig.2b eine bevorzugte Ausgestaltung des Echtzeit-Netzwerks aus Fig. 1b,
Fig.2c eine bevorzugte Ausgestaltung des Echtzeit-Netzwerks aus Fig. 1c.

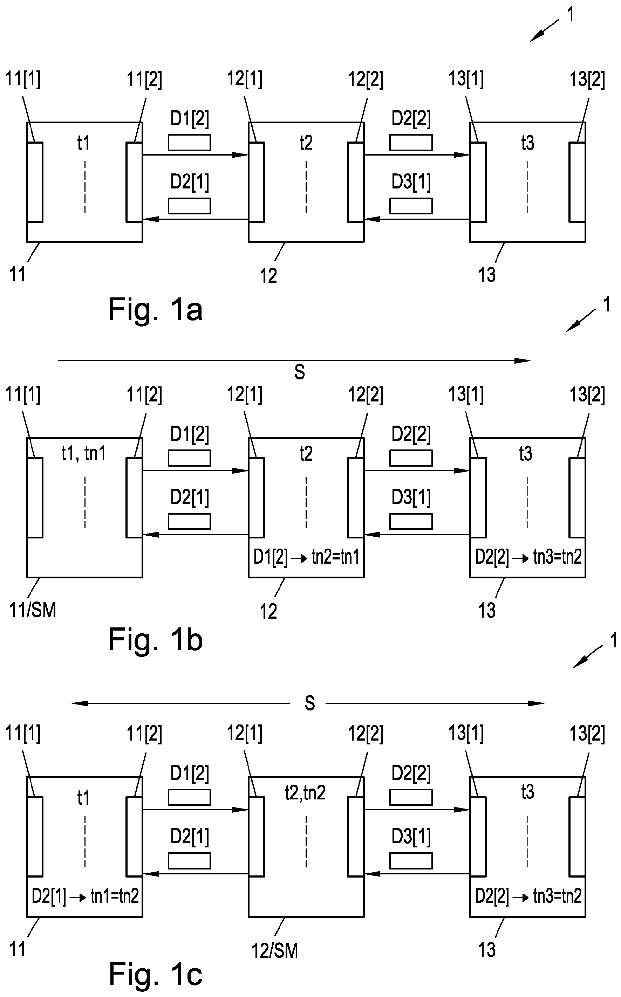

In Fig. 1a ist ein lineares Echtzeit-Netzwerk 1, umfassend drei Teilnehmer 11, 12, 13 dargestellt. Es sei angenommen, dass jeder Teilnehmer 11, 12, 13 jeweils einen ersten Port 11[1], 12[1], 13[1] und einen zweiten Port 11[2], 12[2], 13[2] aufweist. Die Teilnehmer 11, 12, 13 weisen jeweils eine lokale Zeit t1, t2, t3 auf, welche durch einen zugehörigen Zähler bestimmt wird. Die lokale Zeit t1, t2, t3 der Teilnehmer 11, 12, 13 ist aufgrund von Oszillatortoleranzen nicht synchron zueinander. Es ist für die Teilnehmer 11, 12, 13 ebenso eine lokale Netzzeit tn1, tn2, tn3 vorgesehen, welche von der jeweiligen lokalen Zeit t1, t2, t3 abgeleitet wird. Die lokalen Netzzeiten tn1, tn2, tn3 der Teilnehmer 11, 12, 13 sind jedoch nicht synchron zueinander.

Sind Teilnehmer in einem Echtzeit-Netzwerk linear miteinander verbunden, so bedeutet das, dass ein Teilnehmer an einem Ende des linearen Echtzeit-Netzwerks nur über einen Port mit einem weiteren Teilnehmer verbunden ist, wobei der andere Port (oder die anderen Ports) nicht belegt ist/sind. Ebenso ist ein Teilnehmer an einem anderen Ende des linearen Echtzeit-Netzwerks nur über einen Port mit einem weiteren Teilnehmer verbunden, wobei der andere Port (oder die anderen Ports) nicht belegt ist/sind. Die Teilnehmer, die in einem linearen Echtzeit-Netzwerk zwischen den am Ende angeordneten Teilnehmern angeordnet sind, sind jeweils über zwei Ports mit anderen Teilnehmern verbunden.

In Fig. 1a bedeutet das, dass der erste Port 11[1] des ersten Teilnehmers 11 und der zweite Port 13[2] des dritten Teilnehmers 13 nicht belegt sind, da der erste Teilnehmer 11 und der dritte Teilnehmer 13 jeweils ein Ende des linearen Echtzeit-Netzwerks 1 darstellen. Der zweite Teilnehmer 12 befindet sich zwischen den an Ende angeordneten Teilnehmern 11, 13 und ist über seinen ersten Port 12[1] mit dem zweiten Port 11[2] des ersten Teilnehmers 11 verbunden und über seinen zweiten Port 12[2] mit dem ersten Port 13[1] des dritten Teilnehmers 13 verbunden.

Die Teilnehmer 11, 12, 13 sind derart konfiguriert, dass sie mit ihren benachbarten Teilnehmern Synchronisationspakete D1[2], D2[1], D2[2], D3[1] austauschen. Der erste Teilnehmer 11 übermittelt ein Datenpaket D1[2] über seinen zweiten Port 11[2] an den zweiten Teilnehmer 12, welcher das Datenpaket D1[2] an seinem ersten Port 12[1] empfängt. Der zweite Teilnehmer 12 übermittelt ein Datenpaket D2[1] über seinen ersten Port 12[1] an den ersten Teilnehmer 11, welcher das Datenpaket D2[1] an seinem zweiten Port 11[2] empfängt. Ebenso übermittelt der zweite Teilnehmer 12 ein Datenpaket D2[2] an den dritten Teilnehmer 13, welcher das Datenpaket D2[2] an seinem ersten Port 13[1] empfängt. Der dritte Teilnehmer 13 übermittelt über seinen ersten Port 13[1] ein Datenpaket D3[1] an den zweiten Teilnehmer 12, welcher das Datenpaket D3[1] an seinem zweiten Port 12[1] empfängt.

Erfindungsgemäß wird nun einer der Teilnehmer 11, 12, 13 als Synchronisationsmaster SM bestimmt. Fig. 1b stellt das Echtzeit-Netzwerk 1 aus Fig. 1a dar, wobei der erste Teilnehmer 11 als Synchronisationsmaster SM gewählt wird. In Fig. 1c wird der zweite Teilnehmer 12 als Synchronisationsmater SM gewählt. Es wird unter Verwendung der Synchronisationspakete D1[2], D2[1], D2[2], D3[1] die lokale Netzzeit tn1, tn2, tn3 der weiteren Teilnehmer 11, 12, 13 auf die lokale Netzzeit tn1, tn2, tn3 des Synchronisationsmasters SM synchronisiert.

Es wird vorteilhafterweise ausgehend vom Synchronisationsmaster SM ein Synchronisationspfad S über die anderen Teilnehmer 11, 12, 13 des Echtzeit-Netzwerks 1 vorgegeben. In Fig. 1b ergibt sich ausgehend vom ersten Teilnehmer 11 als Synchronisationsmaster SM sinnvollerweise der Weg nach rechts über den zweiten und dritten Teilnehmer 12, 13 als Synchronisationspfad S. Das bedeutet, dass der Synchronisationspfad S vom ersten Teilnehmer 11 über seinen zweiten Port 11[2] an den ersten Port 12[1] des zweiten Teilnehmers 12 und weiter über seinen zweiten Port 12[2] an den ersten Port 13[1] des dritten Teilnehmers 13 führt und am dritten Teilnehmer 13 endet. In Fig. 1c hingegen bedeutet das, dass der Synchronisationspfad S ausgehend vom zweiten Teilnehmer 12 als Synchronisationsmaster SM nach links und nach rechts führt, um alle weiteren Teilnehmer 11, 13 zu erreichen. Der Synchronisationspfad S führt also ausgehend vom zweiten Teilnehmer 12 über seinen ersten Port 12[1] zum zweiten Port 11[2] des ersten Teilnehmers 11 gleichermaßen vom zweiten Teilnehmer 12 über seinen zweiten Port 12[2] zum ersten Port 13[1] des dritten Teilnehmers 13 führt.

Wäre das Echtzeit-Netzwerk 1 aus Fig. 1b als Ringnetzwerk ausgestaltet (nicht dargestellt), d.h. der zweite Port 13[2] des dritten Teilnehmers 13 mit dem ersten Port 11[1] des ersten Teilnehmers 11 verbunden, so wäre ausgehend vom ersten Teilnehmer 11 als Synchronisationsmaster SM wie in Fig. 1b ein Synchronisationspfad S über den zweiten Teilnehmer 12 zum dritten Teilnehmer 13 möglich, wo der Synchronisationspfad S endet. Es wäre im besagten Ringnetzwerk jedoch auch ein Synchronisationspfad S ausgehend vom ersten Teilnehmer 11 über seinen ersten Port 11[1] zum zweiten Port 13[2] des dritten Teilnehmers 13 und weiter über den ersten Port 13[1] des dritten Teilnehmers zum zweiten Port 12[2] des zweiten Teilnehmers 12 möglich, wo der Synchronisationspfad S endet. Gleichermaßen wäre im besagten Ringnetzwerk ausgehend vom ersten Teilnehmer 11 ein aufgeteilter Synchronisationspfad S möglich, d.h. über seinen ersten Port 11[1] zum zweiten Port 13[2] des dritten Teilnehmers 13 und ebenso über seinen zweiten Port 11[2] zum ersten Port 12[1] des zweiten Teilnehmers 12 möglich, wobei der Synchronisationspfad S am zweiten und dritten Teilnehmer 12, 13 endet.

Erfindungsgemäß wird unter Verwendung der Synchronisationspakete D1[2], D2[1], D2[2], D3[1] ausgehend vom Synchronisationsmaster SM und entlang des Synchronisationspfads S die lokale Netzzeit tn1, tn2, tn3 der entlang des Synchronisationspfads S befindlichen Teilnehmer auf die lokale Netzzeit tn1, tn2, tn3 des Synchronisationsmasters SM synchronisiert.

Das bedeutet, dass in Fig. 1b der zweite Teilnehmer 12 seine lokale Netzzeit tn2 auf die lokale Netzzeit tn1 des ersten Teilnehmers 11 synchronisiert, wobei das Datenpaket D1[2] verwendet wird. Der dritte Teilnehmer 13 synchronisiert seine lokale Netzzeit tn3 auf die lokale Netzzeit tn2 des zweiten Teilnehmers 12 und damit auf die lokale Netzzeit tn1 des ersten Teilnehmers 11, wobei das Datenpaket D2[2] verwendet wird. Damit gibt der erste Teilnehmer 11 als Synchronisationsmaster SM seine lokale Netzzeit tn1 als globale Netzzeit vor, wenn als Netzzeitabweichung td10[1], null vorgegeben wird. Ansonsten wird durch die vorgegebene Netzzeitabweichung td10[1], am Synchronisationsmaster SM bestimmt, wie weit seine lokale Zeit t1 von der globalen Netzzeit abweicht.

In Fig. 1c gibt der zweite Teilnehmer 12 als Synchronisationsmaster SM seine lokale Netzzeit tn2 als globale Netzzeit vor, womit sich die lokale Netzzeit tn1 des ersten Teilnehmers 11 auf die lokale Netzzeit tn2 des zweiten Teilnehmers 12 synchronisiert, wobei das Datenpaket D2[1] verwendet wird. Gleichermaßen synchronisiert der dritte Teilnehmer 13 seine lokale Netzzeit tn3 auf die lokale Netzzeit tn2 des zweiten Teilnehmers 12, wobei das Datenpaket D2[2] verwendet wird.

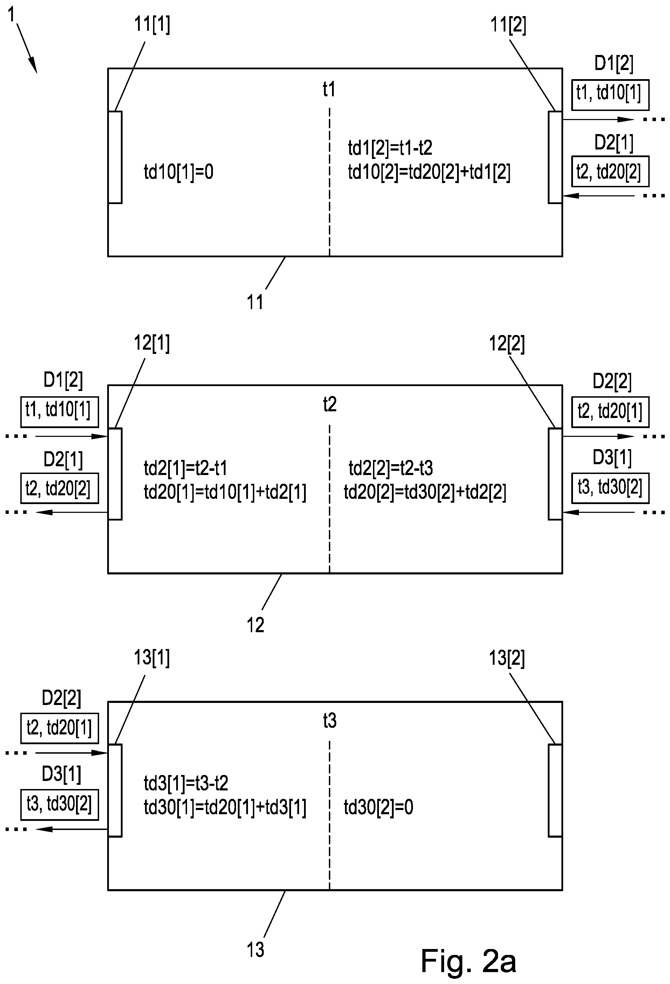

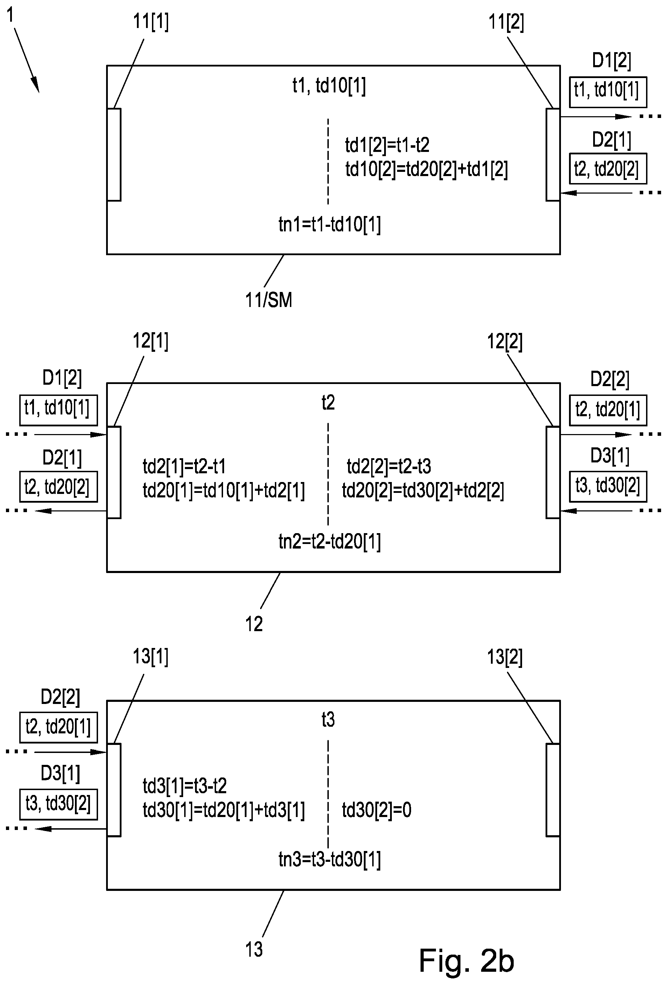

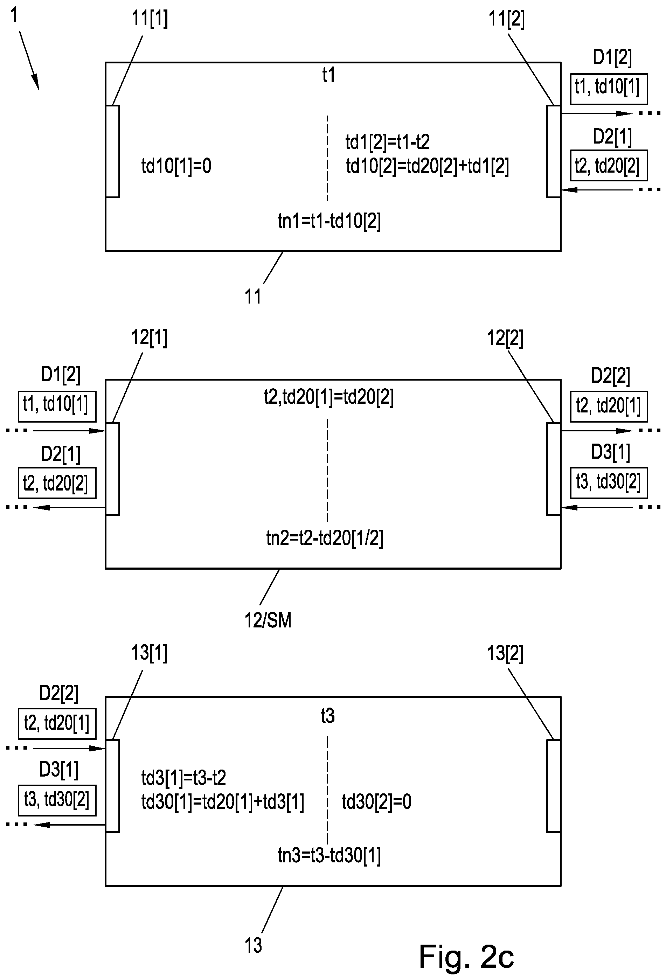

Fig. 2a stellt eine bevorzugte Ausgestaltung dar, wobei das Echtzeit-Netzwerk 1 entsprechend Fig. 1a herangezogen wird. In Fig. 2b wird wie in Fig. 1b der erste Teilnehmer 11 als Synchronisationsmaster SM verwendet und in Fig. 2c wie in Fig. 1c der zweite Teilnehmer 12 als Synchronisationsmaster SM verwendet.

Vorzugsweise berechnen die Teilnehmer 11, 12, 13 für die Ports 11[2], 12[1], 12[2], 13[1], über welche ein Synchronisationspaket D1[2], D2[1], D2[2], D3[1] empfangen wird, jeweils eine Differenzzeit td1[2], td2[1], td2[2], td3[1], woraufhin die lokale Netzzeit tn1, tn2, tn3 der Teilnehmer 11, 12, 13 unter Verwendung der Differenzzeiten td1[2], td2[1], td2[2], td3[1] synchronisiert wird. Hierzu wird durch die Teilnehmer 11, 12, 13 zum Zeitpunkt des Absendens des jeweiligen Synchronisationspakets D1[2], D2[1], D2[2], D3[1] ein Zeitstempel ihrer lokalen Zeit t1, t2, t3 gebildet und mit dem Synchronisationspaket D1[2], D2[1], D2[2], D3[1] übertragen. Die Teilnehmer 11, 12, 13 bilden ebenso zum Zeitpunkt des Empfangens des jeweiligen Synchronisationspakets D1[2], D2[1], D2[2], D3[1] einen Zeitstempel ihrer lokalen Zeit t1, t2, t3. Um die Differenzzeit td1[2], td2[1], td2[2], td3[1] eines Ports 11[2], 12[1], 12[2], 13[1] zu ermitteln wird die Differenz des Zeitstempels, der beim Empfang eines Synchronisationspakets D1[2], D2[1], D2[2], D3[1] gebildet wird und des mit diesem Synchronisationspaket D1[2], D2[1], D2[2], D3[1] empfangenen Zeitstempels berechnet.

Für das Echtzeit-Netzwerk nach Fig. 2a bedeutet das, dass der erste Teilnehmer 11 mit dem Datenpaket D1[2] einen Zeitstempel seiner lokalen Zeit t1 übermittelt. Der zweite Teilnehmer ermittelt beim Empfang des Datenpakets D1[2] einen Zeitstempel seiner lokalen Zeit t2 und berechnet aus der Differenz der Zeitstempel seine Differenzzeit td2[1] für den ersten Port 12[1]: td2[1] = t2-t1.

Ebenso übermittelt der zweite Teilnehmer 12 mit dem Datenpaket D2[1] einen Zeitstempel seiner lokalen Zeit t2 an den ersten Teilnehmer 11 und mit dem Datenpaket D2[2] einen Zeitstempel seiner lokalen Zeit an den dritten Teilnehmer 13. Der erste Teilnehmer 11 ermittelt beim Empfang des Datenpakets D2[1] einen Zeitstempel seiner lokalen Zeit t1 und berechnet aus der Differenz dieser Zeitstempel seine Differenzzeit td1[2] am zweiten Port 11[2]: td1[2] = t1-t2. Der dritte Teilnehmer 13 ermittelt beim Empfang des Datenpakets D2[2] einen Zeitstempel seiner lokalen Zeit t3 und berechnet aus der Differenz dieser Zeitstempel seine Differenzzeit td3[1] für den ersten Port 13[1]: td3[1] = t3-t2.

Gleichermaßen übermittelt der dritte Teilnehmer 13 mit dem Datenpaket D3[1] einen Zeitstempel seiner lokalen Zeit t3 an den zweiten Teilnehmer 12. Der zweite Teilnehmer 12 ermittelt beim Empfang des Datenpakets D3[1] einen Zeitstempel seiner lokalen Zeit t2 und berechnet aus der Differenz dieser Zeitstempel seine Differenzzeit td2[2] für den zweiten Port 12[2]: td2[2] = t2-t3.

Für Ports über welche kein Synchronisationspaket empfangen wird, wird keine Differenzzeit td1[1] td3[2] gebildet. In Fig. 2a empfangen der erste Teilnehmer 11 über seinen ersten Port 11[1] sowie der dritte Teilnehmer 13 über seinen zweiten Port 13[2] kein Synchronisationspaket.

Vorzugsweise übertragen die Teilnehmer 11, 12, 13 jeweils mit dem Synchronisationspaket D1[2], D2[1], D2[2], D3[1] eine Netzzeitabweichung td10[1], td20[1], td20[2], td30[2] eines anderen Ports des Teilnehmers 11, 12, 13. Weist ein Teilnehmer 11, 12, 13 zwei Ports 11[1], 11[2], 12[1], 12[2], 13[1], 13[2] auf, so übermittelt er jeweils über einen Port 11[1], 11[2], 12[1], 12[2], 13[1], 13[2] die Netzzeitabweichung des (genau einen) anderen Ports11[1], 11[2], 12[1], 12[2], 13[1], 13[2]. Weist ein Teilnehmer 11, 12, 13 mehr als zwei Ports auf, so wird, (z.B. vorab) vorgegeben, von welchen Ports an welche Ports die Netzzeitabweichung weitergeleitet wird. Diese Zuordnung der Ports eines Teilnehmers kann in eine Richtung oder in beide Richtungen erfolgen. Ist ein Synchronisationspfad S bekannt, so kann der Synchronisationspfad S vorgeben von welchen Ports an welche Ports die Netzzeitabweichung weitergeleitet wird. Es kann vorgesehen sein, dass die Netzzeitabweichung lediglich in Richtung des Synchronisationspfads S weitergeleitet werden, oder entsprechend der Portzuordnung des Synchronisationspfads S ohne Berücksichtigung der Richtung (d.h. in Richtung des Synchronisationspfads S und entgegen der Richtung des Synchronisationspfads S) weitergeleitet werden.

Das bedeutet entlang des Synchronisationspfads S betrachtet, dass der erste Teilnehmer 11 mit dem Datenpaket D1[2] über den zweiten Port 11[2] eine Netzzeitabweichung td10[1] seines ersten Ports 11[1] an den zweiten Teilnehmer 12 übermittelt und der zweite Teilnehmer 12 mit dem Datenpaket D2[2] über seinen zweiten Port 12[2] eine Netzzeitabweichung td20[1] seines ersten Ports 12[1] an den dritten Teilnehmer 13 übermitteln.

Zudem kann entgegen des Synchronisationspfads S der dritte Teilnehmer 13 mit dem Datenpaket D3[1] über den ersten Port 13[1] eine Netzzeitabweichung td30[2] seines zweiten Ports 13[2] an den zweiten Teilnehmer 12 übermitteln und der zweite Teilnehmer 12 mit dem Datenpaket D2[1] über seinen ersten Port 12[1] eine Netzzeitabweichung td20[2] seines zweiten Ports 12[2] an den ersten Teilnehmer 11 übermitteln. Zur besseren Darstellung wird in Folge jedoch lediglich eine Übermittlung der Netzzeitabweichung in Richtung des Synchronisationspfads S betrachtet.

Um jedoch die Netzzeitabweichung td10[2], td20[1], td20[2], td30[1] eines Ports 11[2], 12[1], 12[2], 13[1], über welchen ein Synchronisationspaket D2[1], D1[2], D3[1], D2[2] empfangenen wird, zu erhalten, wird diese aus der bereits berechneten Differenzzeit td1[2], td2[1], td2[2], td3[1] und wiederum einer im Synchronisationspaket D2[1], D1[2], D3[1], D2[2] empfangenen Netzzeitabweichung td10[2], td20[1], td20[2], td30[1] berechnet.

Um die Berechnung der Netzzeitabweichung td10[1], td20[1], td20[2], td30[2] zu starten, können anfangs Initialwerte, vorzugsweise null, für die Netzzeitabweichung td10[1], td10[2], td20[1], td20[2], td30[1], td30[2] vorgegeben werden.

Für Ports 11[1], 13[2], über welche kein Synchronisationspaket empfangen wird, kann eine Netzzeitabweichung td10[1], td30[2] von null vorgegeben werden.

Für Fig. 2a wird für die Netzzeitabweichung td10[1] des ersten Ports 11[1] des ersten Teilnehmers 11 eine Netzzeitabweichung td10[1] von null vorgegeben. Diese Netzzeitabweichung td10[1] des ersten Ports 11[1] wird über den anderen, zweiten Port 11[2] des ersten Teilnehmers 11, an den zweiten Teilnehmer 12 übermittelt.

Der zweite Teilnehmer 12 erhält somit an seinem ersten Port 12[1] mit dem ersten Datenpaket D1[2] die Netzzeitabweichung td10[1] und berechnet daraus unter Verwendung der Differenzzeit td2[1] seines ersten Ports 12[1] die Netzzeitabweichung td20[1] = td10[1]+td2[1] des ersten Ports 12[1]. Diese Netzzeitabweichung td20[1] des ersten Ports 12[1] wird im Datenpaket D2[2] über den anderen, zweiten Port 12[2], an den dritten Teilnehmer 13 übermittelt. Der dritte Teilnehmer 13 empfängt das Datenpaket D2[2] an seinem ersten Port 13[1] und berechnet daraus unter Verwendung der Differenzzeit td3[1] des ersten Ports 13[1] die Netzzeitabweichung td30[1] des ersten Ports 13[1] zu td30[1] = td20[1]+td3[1].

Beim Schritt der Berechnung der lokalen Netzzeit tn1, tn2, tn3 der Teilnehmer 11, 12, 13 erfolgt eine Berücksichtigung des Synchronisationspfads S. So wird die Netzzeit tn1, tn2, tn3 der Teilnehmer 11, 12, 13 aus der Differenz ihrer lokalen Zeit t1, t2, t3 und der Netzzeitabweichung (in Fig. 2b td10[1], td20[1], td30[1]) von entgegen des Synchronisationspfads S angeordneten Ports (in Fig. 2b 11[1], 12[1], 13[1]) berechnet. Es wird also durch die Wahl des Synchronisationsmasters SM und damit des Synchronisationspfads S den Teilnehmern 11, 12, 13 vorgegeben, von welchem Port ausgehend sie die lokale Netzzeit tn1[1], tn2[1], tn3[1] berechnen sollen, wobei jeweils der Port entgegen des Synchronisationspfads S gewählt wird. Wie erwähnt, kann bei der Übermittlung der Netzzeitabweichung der Synchronisationspfad S unberücksichtigt bleiben. In Fig. 2b ist der erste Teilnehmer 11 als Synchronisationsmaster SM gewählt. Damit wird die lokale Netzzeit tn1 des ersten Teilnehmers 11 aus der Differenz seiner lokalen Zeit t1 und der Netzzeitabweichung td10[1] des ersten Ports 11[1] berechnet. Die Netzzeitabweichung td10[1] wird vorgegeben, vorzugsweise mit td10[1] = 0, womit bei einer Netzzeitabweichung td10[1] von null die lokale Zeit t1 des ersten Teilnehmers 11 seine lokale Netzzeit tn1 vorgibt: tn1 = t1 - td10[1] = t1. Die weiteren Teilnehmer 12, 13 synchronisieren ihre lokale Netzzeit tn2, tn3 auf die lokale Netzzeit tn1 des ersten Teilnehmers 11. Der erste Teilnehmer 11 übermittelt wie oben ausgeführt seine vorgegebene Netzzeitabweichung td10[1] mit dem Datenpaket D1[2] an den zweiten Teilnehmer 12. Der zweite Teilnehmer 12 berechnet seine lokale Netzzeit tn2 unter Verwendung der (vorzugsweise bereits berechneten) Netzzeitabweichung td20[1] des ersten Ports 12[1], da dieser gegen den Synchronisationspfad S liegt, zu tn2 = t2-td20[1]. Der zweite Teilnehmer 12 übermittelt wie oben ausgeführt seine Netzzeitabweichung td20[1] mit dem Datenpaket D2[2] an den dritten Teilnehmer 13, welcher seine lokale Netzzeit tn3 unter Verwendung seiner (bereits berechneten) Netzzeitabweichung td30[1] des ersten Ports 13[1], da dieser gegen den Synchronisationspfad liegt, zu tn3 = t3-td30[1] berechnet. Damit ist in Fig.2b. die lokale Netzzeit tn2, tn3 des zweiten Teilnehmers 12 und des dritten Teilnehmers 13 auf die Netzzeit tn1 des ersten Teilnehmers 11 als Synchronisationsmaster SM synchronisiert.

In Fig. 2c ist der zweite Teilnehmer 12 als Synchronisationsmaster SM bestimmt. Es wird ausgehend vom Synchronisationsmaster SM ein Synchronisationspfad S über die anderen Teilnehmer 11, 13 des Echtzeit-Netzwerks 1 vorgegeben. Für Fig. 2c bedeutet das wie bereits für Fig. 1c, dass der Synchronisationspfad S ausgehend vom zweiten Teilnehmer 12 als Synchronisationsmaster SM über den ersten Port 12[1] zum ersten Teilnehmer 11 und über den zweiten Port 12[2] zum dritten Teilnehmer 13 führt.

Durch die Wahl des Synchronisationspfads S wird den Teilnehmern 11, 12, 13 vorgegeben, ausgehend von welchem Port 11[1], 11[2], 12[1], 12[2], 13[1], 13[2] sie die lokale Netzzeit tn1, tn3 berechnen sollen, wobei jeweils der Port 11[1], 11[2], 12[1], 12[2], 13[1], 13[2] entgegen des Synchronisationspfads S gewählt wird. Der zweite Teilnehmer 12 ist der Synchronisationsmaster SM, weshalb er mit dem mit dem Synchronisationspaket D2[1], D2[2] entlang des Synchronisationspfads (S), d.h. über die die Ports 12[1], 12[2] eine vorgegebene Netzzeitabweichung td20[1], td20[2] überträgt. Damit wird dem zweiten Teilnehmer 12 für die Ports 12[1], 12[2] die Netzzeitabweichung td20[1] = td20[2], vorzugsweise null vorgegeben.

Somit werden für den zweiten Teilnehmer 12 auch die Differenzzeiten td2[1], td2[2] der Ports 12[1], 12[2] nicht berücksichtigt (die Netzzeitabweichungen td20[1] td20[2] sind ja bereits vorgegeben), sondern vielmehr die lokale Netzzeit tn2 direkt aus der Differenz der lokalen Zeit t2 und der vorgegebenen Netzzeitabweichung td20 berechnet: tn2 = t2-td20.

Aufgrund des vorgegebenen Synchronisationspfads S berücksichtigt der erste Teilnehmer 11 bei der Berechnung seiner lokalen Netzzeit tn1 die Netzzeitabweichung td10[2] des zweiten Ports 11[2] (da sein zweiter Port 11[2] gegen den Synchronisationspfad S liegt): tn1 = t1-td10[2]. Gleichermaßen berücksichtigt der dritte Teilnehmer 13 bei der Berechnung seiner lokalen Netzzeit tn3 die Netzzeitabweichung td30[1] des ersten Ports 13[1] (da sein erster Port 13[1] gegen den Synchronisationspfad S liegt): tn3 = t3-td30[1].

Damit ist die lokale Netzzeit tn1, tn3 des ersten und dritten Teilnehmers 11, 13 auf die lokale Netzzeit tn2 des zweiten Teilnehmers 12 synchronisiert.

Die (vorgegebene) Netzzeitabweichung td20 des zweiten Teilnehmers 12 (Synchronisationsmaster SM) beschreibt, wie erwähnt, die Differenz aus seiner lokalen Zeit t2 und der globalen Netzzeit .

Vorzugsweise korrigieren die Teilnehmer 11, 12, 13 ihre Netzzeitabweichung td10[1], td10[2], td20[1], td20[2], td30[1], td30[2] jeweils um eine Signallaufzeit tt1[2], tt2[1], tt2[2], tt3[1]. Dies kann erfolgen, indem im Synchronisationspaket D1[2], D2[1], D2[2], D3[1] jeweils die Differenzzeit td1[2], td2[1], td2[2], td3[1] des Ports 11[2], 12[1], 12[2], 13[1], über welchen das Synchronisationspaket D1[2], D2[1], D2[2], D3[1] gesendet wird, übermittelt wird (nicht in den Figuren dargestellt). Die Teilnehmer 11, 12, 13 berechnen ihre Signallaufzeit tt1[2], tt2[1], tt2[3], tt3[2] an einem Port 11[2], 12[1], 12[2], 13[1] aus der halbierten Differenz der an diesem Port 11[2], 12[1], 12[2], 13[1] im Synchronisationspaket D1[2], D2[1], D2[2], D3[1] empfangenen Differenzzeit td1[2], td2[1], td2[2], td3[1] und der für diesen Port ermittelten Differenzzeit td1[2], td2[1], td2[2], td3[1]. Dies erfolgt unter der Annahme, dass die Transferzeit zwischen benachbarten Teilnehmern 11, 12, 13 jeweils zueinander identisch ist.

Das bedeutet für das Echtzeit-Netzwerk 1 entsprechend Fig.2, dass der erste Teilnehmer 11 im Datenpaket D1[2] seine Differenzzeit td1[2] überträgt und im Datenpaket D2[1] die Differenzzeit td2[1] des zweiten Teilnehmers 12 erhält. Die Signallaufzeit tt1[2] an seinem Port 11[2] ergibt sich dann nach tt1[2] = (td1[2] + td2[1])/2. Somit kann der erste Teilnehmer die Netzzeitabweichung td10[2] des Ports 11[2] um die Signallaufzeit tt1[2] korrigieren: td10[2] = td10[2] - tt1[2]. Der zweite Teilnehmer 12 berechnet seine Signallaufzeit tt2[1] an seinem Port 12[1] nach tt2[1] = (td2[1] + td1[2])/2, womit er die Netzzeitabweichung td20[2] seines Ports 12[1] um die Signallaufzeit tt2[1] korrigieren kann: td20[1] = td20[1]-tt2[1].

Der zweite Teilnehmer 12 überträgt im Datenpaket D2[2] seine Differenzzeit td2[2] und empfängt im Datenpaket D2[1] die Differenzzeit td3[1] des dritten Teilnehmers 13. Die Signallaufzeit tt2[2] an seinem Port 12[2] ergibt sich dann nach tt2[2] = (td2[2] +td3[1])/2. Somit kann der zweite Teilnehmer die Netzzeitabweichung td20[2] seines Ports 12[2] um die Signallaufzeit tt2[2] korrigieren: td20[2] = td20[2]-tt2[2]. Der dritte Teilnehmer 13 berechnet seine Signallaufzeit tt3[1] an seinem Port 13[1] nach tt3[1] = (td3[1] + td2[2])/2, womit er die Netzzeitabweichung td30[1] seines Ports 13[1] um die Signallaufzeit tt3[1] korrigieren kann: td30[1] = td30[1] - tt3[1].

Vorzugsweise werden die Differenzzeiten td1[2], td2[1], td2[2], td3[1] jeweils nach ihrer Ermittlung gefiltert, um Jitter und Quantisierungseffekte zu minimieren. Vorzugsweise wird hierzu ein Filter mit exponentieller Glättungsfunktion verwendet werden. Es können auch um Signallaufzeiten tt1[2], tt2[1], tt2[2], tt3[1] korrigierte Differenzzeiten td1[2], td2[1], td2[2], td3[1], gefiltert werden,

Die Übermittlung der Synchronisationspakete D1[2], D2[1], D2[2], D3[1] zwischen den Teilnehmern und die damit verbundene Synchronisation der Netzzeit tn1, tn2, tn3 der Teilnehmer 11, 12, 13 benötigt jeweils eine gewisse Zeitspanne. Da die Zähler der Teilnehmer 11, 12, 13, welche jeweils für Bestimmung der lokalen Zeiten t1, t2, t3 verwendet werden, aufgrund von Oszillatortoleranzen unterschiedlich schnell zählen, können die Netzzeiten tn1, tn2, tn3 der Teilnehmer 11, 12, 13 (die ja aus den lokalen Zeiten t1, t2, z3 der Teilnehmer 11, 12, 13 abgeleitet werden) zwischen den Synchronisationszeitpunkten auseinanderdriften. Dies ist bei einer Linientopologie von Teilnehmern 11, 12, 13 durch ein aneinander-gekettetes Weiterreichen der Synchronisationspakete D1[2], D2[1], D2[2], D3[1] besonders stark ausgeprägt. Vorzugsweise wird jeweils eine Differenz der aktuellen Netzzeitabweichung td10[1], td20[1], td20[2], td30[2] im aktuellen Zyklus n und der Netzzeitabweichung td10[1], td20[1], td20[2], td30[2] aus einem vorhergehenden Zyklus (z.B. dem direkt vorhergehenden Zyklus n-1) berechnet, womit sich eine Netzzeitabweichungsdifferenz, welche den Drift beschreibt, ergibt. Da sich die Abweichungen der Zählgeschwindigkeiten der Zähler über die Zeit ändern können, ist eine mehrfache Messung der Netzzeitabweichungsdifferenz vorteilhaft. Vorzugsweise erfolgt die Ermittlung der Netzzeitabweichungsdifferenz in jedem Synchronisationszyklus.

Die Netzzeitabweichungsdifferenz kann gefiltert werden, womit sich eine gefilterte Netzzeitabweichungsdifferenz ergibt. Wird diese gefilterte Netzzeitabweichungsdifferenz zur aktuelle Netzzeitabweichung im aktuellen Zyklus n addiert, so ergibt sich eine kompensierte Netzzeitabweichung, welche statt der ursprünglichen Netzzeitabweichung td10[1], td20[1], td20[2], td30[2] verwendet werden kann, um Abweichungen der synchronisierten Netzzeit aufgrund von Oszillatortoleranzen zu kompensieren. Durch eine Filterung der Netzzeitabweichungsdifferenz kann die Genauigkeit der kompensierten Netzzeitabweichung sogar die Messauflösung übertreffen, wenn die Netzzeitabweichung monoton und die Netzzeitabweichungsdifferenz zumindest annähernd konstant ist. Die Genauigkeit kann insbesondere erhöht werden, wenn die Trägheit der Änderung der Frequenz größer als die Filterlänge ist, was auch bei großen Filterlängen noch der Fall ist, da die Änderung der Frequenz nur durch Temperaturänderung und Alterungsprozesse verursacht wird und diese Vorgänge sehr langsam sind.

## Patentansprüche

1. Verfahren zum Synchronisieren der jeweiligen lokalen Netzzeit (tn1, tn2, tn3) von Teilnehmern (11, 12, 13) eines Echtzeit-Netzwerks (1), wobei die Teilnehmer (11, 12, 13) jeweils eine lokale Zeit (t1, t2, t3) aufweisen und die jeweilige lokale Netzzeit (tn1, tn2, tn3) eines Teilnehmers (11, 12, 13) von der jeweiligen lokalen Zeit (t1, t2, t3) abgeleitet wird,
wobei die Teilnehmer (11, 12, 13) über Ports (11[1], 11[2], 12[1], 12[2], 13[1], 13[2]) miteinander verbunden sind, wobei die Teilnehmer (11, 12, 13), vorzugsweise zyklisch, jeweils Synchronisationspakete (D1[2], D2[1], D2[2], D3[1]) an verbundene Teilnehmer (11, 12, 13) übermitteln, wobei ein Teilnehmer (11, 12, 13) des Echtzeit-Netzwerks (1) als Synchronisationsmaster (SM) bestimmt wird, wobei unter Verwendung der Synchronisationspakete (D1[2], D2[1], D2[2], D3[1]) die lokale Netzzeit (tn1, tn2, tn3) der weiteren Teilnehmer (11, 12, 13) auf die lokale Netzzeit (tn1, tn2, tn3) des Synchronisationsmasters (SM) synchronisiert wird,
wobei unter Verwendung der Synchronisationspakete (D1[2], D2[1], D2[2], D3[1]) ausgehend vom Synchronisationsmaster (SM) entlang eines Synchronisationspfads (S) die lokale Netzzeit (tn1, tn2, tn3) der entlang des Synchronisationspfads (S) befindlichen Teilnehmer (11, 12, 13) auf die lokale Netzzeit (tn1, tn2, tn3) des Synchronisationsmasters (SM) synchronisiert wird,
**dadurch gekennzeichnet**
**dass** die Teilnehmer (11, 12, 13) zum Zeitpunkt des Absendens des jeweiligen Synchronisationspakets (D1[2], D2[1], D2[2], D3[1)) einen Zeitstempel ihrer lokalen Zeit (t1, t2, t3) mit dem Synchronisationspaket (D1[2], D2[1], D2[2], D3[1]) übertragen, **dass** die Teilnehmer (11, 12, 13) für einen Port (11[2], 12[1], 12[2], 13[1]), über welchen ein Synchronisationspaket (D1[2], D2[1], D2[2], D3[1]) empfangen wird, eine Differenzzeit (td1[2], td2[1], td2[2], td3[1]) aus einer Differenz des im Synchronisationspaket (D1[2], D2[1], D2[2], D3[1]) empfangenen Zeitstempels und eines Zeitstempels ihrer lokalen Zeit (t1, t2, t3) beim Empfang des betreffenden Synchronisationspakets (D1[2], D2[1], D2[2], D3[1]) berechnen, **dass** die Teilnehmer (11, 12, 13) mit dem jeweiligen Synchronisationspaket (D1[2], D2[1], D2[2], D3[1)) jeweils eine Netzzeitabweichung (td10[1], td20[1], td20[2], td30[2]) eines ihrer anderen Ports, übertragen, wobei die Teilnehmer (11, 12, 13) die Netzzeitabweichung (td10[1], td20[1], td20[2], td30[2]) der Ports (11[2], 12[1], 12[2], 13[1]), über welche ein Synchronisationspaket (D1[2], D2[1], D2[2], D3[1]) empfangen wird, jeweils als Summe der berechneten Differenzzeit (td1[2], td2[1], td2[2], td3[1]) und einer im Synchronisationspaket (D1[2], D2[1], D2[2], D3[1]) empfangenen Netzzeitabweichung (td10[1], td20[1], td20[2], td30[2]) berechnen, **und dass** die Teilnehmer (11, 12, 13) ihre lokale Netzzeit (tn1, tn2, tn3) aus der Differenz ihrer lokalen Zeit (t1, t2, t3) und der Netzzeitabweichung (td10[2], td20[1], td30[1]) des entgegen des Synchronisationspfads (S), in Richtung zum Synchronisationsmaster hin, angeordneten Ports (11[2], 12[1], 12[2], 13[1]) berechnen, wobei die lokale Netzzeit (tn1, tn2, tn3) der Teilnehmer synchronisiert wird.

2. Verfahren nach Anspruch 1, **dadurch gekennzeichnet, dass** ausgehend vom Synchronisationsmaster (SM) ein über die weiteren Teilnehmer (11, 12, 13) verlaufender Synchronisationspfad (S) vorgegeben wird, **und dass** die lokale Netzzeit (tn1, tn2, tn3) der weiteren Teilnehmer (11, 12, 13) entlang des Synchronisationspfads (S) auf die lokale Netzzeit (tn1, tn2, tn3) des Synchronisationsmasters (SM) synchronisiert wird.

3. Verfahren nach Anspruch 2, **dadurch gekennzeichnet, dass** der Synchronisationsmaster (SM) mit dem Synchronisationspaket (D1[2], D3[1)) entlang des Synchronisationspfads (S) jeweils eine vorgegebene Netzzeitabweichung [td10[1], td30[2]) überträgt, **und dass** für Ports 11[1], 13[2]), über welche kein Synchronisationspaket (D1[2], D2[1], D2[2], D3[1]) empfangen wird, eine Netzzeitabweichung [td10[1], td30[2]) von null vorgegeben wird.

4. Verfahren nach einem der Ansprüche 1 bis 3, **dadurch gekennzeichnet, dass** die Teilnehmer (11, 12, 13) die Netzzeitabweichung (td10[1], td20[1], td20[2], td30[2]) der Ports (11[2], 12[1], 12[2], 13[1]), über welche ein Synchronisationspaket (D1[2], D2[1], D2[2], D3[1]) empfangen wird, um eine Signallaufzeit (tt1[2], tt2[1], tt2[2], tt3[1]) des empfangenen Synchronisationspakets (D1[2], D2[1], D2[2], D3[1]) korrigieren.

5. Verfahren nach Anspruch 4, **dadurch gekennzeichnet, dass** die Teilnehmer (11, 12, 13) jeweils die Differenzzeit (td1[2], td2[1], td2[2], td3[1]) der Ports, über welche das jeweilige Synchronisationspaket (D1[2], D2[1], D2[2], D3[1]) gesendet wird, mit dem Synchronisationspaket (D1[2], D2[1], D2[2], D3[1]) übermitteln, **und dass** die Teilnehmer (11, 12, 13) die Signallaufzeit (tt1[2], tt2[1], tt2[2], tt3[1]) des empfangenen Synchronisationspakets (D1[2], D2[1], D2[2], D3[1]) aus der mit dem Synchronisationspaket (D1[2], D2[1], D2[2], D3[1]) empfangenen Differenzzeit (td1[2], td2[1], td2[2], td3[1]) und der Differenzzeit (td1[2], td2[1], td2[2], td3[1]) des Ports, über welchen das Synchronisationspaket (D1[2], D2[1], D2[2], D3[1]) empfangen wird, berechnen.

6. Verfahren nach Anspruch 5, **dadurch gekennzeichnet, dass** die Teilnehmer (11, 12, 13) die Signallaufzeit (tt1[2], tt2[1], tt2[2], tt3[1]) des empfangenen Synchronisationspakets (D1[2], D2[1], D2[2], D3[1]) aus der halbierten Differenz der mit dem Synchronisationspaket (D1[2], D2[1], D2[2], D3[1]) empfangenen Differenzzeit (td1[2], td2[1], td2[2], td3[1]) und der Differenzzeit (td1[2], td2[1], td2[2], td3[1]) des Ports, über welchen das Synchronisationspaket (D1[2], D2[1], D2[2], D3[1]) empfangen wird, berechnen.

7. Verfahren nach einem der Ansprüche 1 bis 6, **dadurch gekennzeichnet, dass** die Teilnehmer (11, 12, 13) jeweils aus einer aktuellen Netzzeitabweichung (td10[1], td20[1], td20[2], td30[2]) in einem aktuellen Zyklus und einer Netzzeitabweichung (td10 [1], td20[1], td20[2], td30[2]) aus einem vorhergehenden Zyklus eine Netzzeitabweichungsdifferenz berechnen und vorzugsweise filtern, **und dass** die berechnete und vorzugsweise gefilterte Netzzeitabweichungsdifferenz zur aktuellen Netzzeitabweichung (td10[1], td20[1], td20[2], td30[2]) im aktuellen Zyklus addiert wird, um eine korrigierte Netzzeitabweichungsdifferenz zu erhalten , wobei vorzugsweise ein Filter mit exponentieller Glättungsfunktion verwendet wird, **und dass** die korrigierte Netzzeitabweichungsdifferenz die ursprüngliche aktuellen Netzzeitabweichung (td10[1], td20[1], td20[2], td30[2]) ersetzt.

8. Verfahren nach einem der Ansprüche 1 bis 7, **dadurch gekennzeichnet, dass** die Differenzzeit (td1[2], td2[1], td2[2], td3[1]) jeweils gefiltert wird, wobei vorzugsweise ein Filter mit exponentieller Glättungsfunktion verwendet wird.

9. Verfahren nach einem der Ansprüche 1 bis 8, **dadurch gekennzeichnet, dass** bei Wegfall des festgelegten Synchronisations-Masters (SM) ein anderer Teilnehmer (11, 12, 13) als neuer Synchronisations-Master (SM) festgelegt wird.

10. Verfahren nach einem der Ansprüche 1 bis 9, **dadurch gekennzeichnet, dass** die Teilnehmer (11, 12, 13) des Echtzeit-Netzwerks (1) linear miteinander verbunden sind.

11. Verfahren nach einem der Ansprüche 1 bis 10, **dadurch gekennzeichnet, dass** die Teilnehmer (11, 12, 13) jeweils zwei Ports (11[1], 11[2], 12[1], 12[2], 13[1], 13[2]) aufweisen

12. Verfahren nach einem der Ansprüche 1 bis 11, **dadurch gekennzeichnet, dass** das die Synchronisationspakete (D1[2], D2[1], D2[2], D3[1]) im ISO-OSI-Layer 2 übertragen wird.

13. Verfahren nach einem der Ansprüche 1 bis 12, **dadurch gekennzeichnet, dass** das Echtzeit-Netzwerk (1) ein serielles Echtzeit-Netzwerk, dessen Teilnehmer über Switches miteinander verbunden sind, darstellt.

14. Echtzeit-Netzwerk (1) umfassend eine Anzahl Teilnehmer (11, 12, 13), die über Ports (11[1], 11[2], 12[1], 12[2], 13[1], 13[2]) miteinander verbunden sind, wobei die Teilnehmer (11, 12, 13) ausgestaltet sind, jeweils Synchronisationspakete (D1[2], D2[1], D2[2], D3[1]) an verbundene Teilnehmer (11, 12, 13) übermitteln, wobei ein Teilnehmer (11, 12, 13) des Echtzeit-Netzwerks (1) als Synchronisationsmaster (SM) bestimmt ist, wobei die weiteren Teilnehmer (11, 12, 13) ausgestaltet sind, aus einer lokalen Zeit (t1, t2, t3), welche die Teilnehmer (11, 12, 13) jeweils aufweisen, ihre lokale Netzzeit (tn1, tn2, tn3) abzuleiten und unter Verwendung der Synchronisationspakete (D1[2], D2[1], D2[2], D3[1]) ihre lokale Netzzeit (tn1, tn2, tn3) auf die lokale Netzzeit (tn1, tn2, tn3) des Synchronisationsmasters (SM) zu synchronisieren,
wobei die Teilnehmer (11, 12, 13) entlang eines Synchronisationspfades (S) angeordnet sind, um unter Verwendung der Synchronisationspakete (D1[2], D2[1], D2[2], D3[1]) ausgehend vom Synchronisationsmaster (SM) entlang eines Synchronisationspfads (S) die lokale Netzzeit (tn1, tn2, tn3) auf die lokale Netzzeit (tn1, tn2, tn3) des Synchronisationsmasters (SM) zu synchronisieren,
**dadurch gekennzeichnet dass** die Teilnehmer (11, 12, 13) ausgestaltet sind, zum Zeitpunkt des Absendens des jeweiligen Synchronisationspakets (D1[2], D2[1], D2[2], D3[1)) einen Zeitstempel ihrer lokalen Zeit (t1, t2, t3) mit dem Synchronisationspaket (D1[2], D2[1], D2[2], D3[1]) zu übertragen, und dass die Teilnehmer (11, 12, 13) ausgestaltet sind, für einen Port (11[2], 12[1], 12[2], 13[1]), über welchen ein Synchronisationspaket (D1[2], D2[1], D2[2], D3[1]) empfangen wird, eine Differenzzeit (td1[2], td2[1], td2[2], td3[1]) aus einer Differenz des im Synchronisationspaket (D1[2], D2[1], D2[2], D3[1]) empfangenen Zeitstempels und eines Zeitstempels ihrer lokalen Zeit (t1, t2, t3) beim Empfang des betreffenden Synchronisationspaket (D1[2], D2[1], D2[2], D3[1]) zu berechnen, mit dem jeweiligen Synchronisationspaket (D1[2], D2[1], D2[2], D3[1)) jeweils eine Netzzeitabweichung (td10[1], td20[1], td20[2], td30[2]) eines ihrer anderen Ports, zu übertragen, wobei die Netzzeitabweichung (td10[1], td20[1], td20[2], td30[2]) der Ports (11[2], 12[1], 12[2], 13[1]), über welche ein Synchronisationspaket (D1[2], D2[1], D2[2], D3[1]) empfangen wird, jeweils als Summe der berechneten Differenzzeit (td1[2], td2[1], td2[2], td3[1]) und einer im Synchronisationspaket (D1[2], D2[1], D2[2], D3[1]) empfangenen Netzzeitabweichung (td10[1], td20[1], td20[2], td30[2]) berechnet wird, und ihre lokale Netzzeit (tn1, tn2, tn3) aus der Differenz ihrer lokalen Zeit (t1, t2, t3) und der Netzzeitabweichung (td10[2], td20[1], td30[1]) des entgegen des Synchronisationspfads (S), in Richtung zum Synchronisationsmaster hin,
angeordneten Ports (11[2], 12[1], 12[2], 13[1]) zu berechnen, um die lokale Netzzeit (tn1, tn2, tn3) zu synchronisieren.

## Claims

1. Method for synchronizing the respective local network time (tn1, tn2, tn3) of participants (11, 12, 13) of a real-time network (1), the participants (11, 12, 13) each having a local time (t1, t2, t3) and the respective local network time (tn1, tn2, tn3) of a participant (11, 12, 13) is derived from the respective local time (t1, t2, t3), wherein the participants (11, 12, 13) are connected to one another via ports (11[1], 11[2], 12[1], 12[2], 13[1], 13[2]), wherein the participants (11, 12, 13) each transmit, preferably cyclically, synchronization packets (D1[2], D2[1], D2[2], D3[1]) to connected participants (11, 12, 13), wherein a participant (11, 12, 13) of the real-time network (1) is designated as a synchronization master (SM), wherein the local network time (tn1, tn2, tn3) of the other participants (11, 12, 13) is synchronized with the local network time (tn1, tn2, tn3) of the synchronization master (SM) by using the synchronization packets (D1[2], D2[1], D2[2], D3[1]), wherein using the synchronization packets (D1[2], D2[1], D2[2], D3[1]) starting from the synchronization master (SM) along a synchronization path (S), the local network time (tn1, tn2, tn3) of the participants (11, 12, 13) along the synchronization path (S) is synchronized with the local network time (tn1, tn2, tn3) of the synchronization master (SM), **characterized in that**, the participants (11, 12, 13) transmit a time stamp of their local time (t1, t2, t3) with the synchronization packet (D1[2], D2[1], D2[2], D3[1]) at the time of sending the respective synchronization packet (D1[2], D2[1], D2[2], D3 [1), **in that** the participants (11, 12, 13) for a port (11[2], 12[1], 12[2], 13[1]), via which a synchronization packet (D1[2], D2[1], D2[2], D3[1]) is received, calculate a difference time (td1[2], td2[1], td2[2], td3[1]) from a difference between the time stamp received in the synchronization packet (D1[2], D2[1], D2[2], D3[1]) and a time stamp of their local time (t1, t2, t3) on receipt of the relevant synchronization packet (D1[2], D2[1], D2[2], D3[1]), **in that** the participants (11, 12, 13) each transmit with the respective synchronization packet (D1[2], D2[1], D2[2], D3[1)) a network time deviation (td10[1], td20[1], td20[2], td30[2]) of one of their other ports, wherein the participants (11, 12, 13) calculate the network time deviation (td10[1], td20[1], td20[2], td30[2]) of the ports (11[2], 12[1], 12[2], 13[1]), via which a synchronization packet (D1[2], D2[1], D2[2], D3[1]) is received, in each case as the sum of the calculated difference time (td1[2], td2[1], td2[2], td3[1]) and a network time deviation (td10[1], td20[1], td20[2], td30[2]) received in the synchronization packet (D1[2], D2[1], D2[2], D3[1]), **and in that** the participants (11, 12, 13) calculate their local network time (tn1, tn2, tn3) from the difference between their local time (t1, t2, t3) and the network time deviation (td10[2], td20[1], td30[1]) of the port (11[2], 12[1], 12[2], 13[1]) arranged opposite the synchronization path (S), in the direction of the synchronization master, wherein the local network time (tn1, tn2, tn3) of the participants is synchronized.

2. Method according to claim 1, **characterized in that,** starting from the synchronization master (SM), the synchronization path (S) extending via the additional participants (11, 12, 13) is predefined, **and that** the local network time (tn1, tn2, tn3) of the further participants (11, 12, 13) along the synchronization path (S) is synchronized with the local network time (tn1, tn2, tn3) of the synchronization master (SM).

3. Method according to claim 2, **characterized in that** the synchronization master (SM) transmits a specified network time deviation [td10[1], td30[2]) with the synchronization packet (D1[2], D3[1)) along the synchronization path (S) in each case, **and that** for ports 11[1], 13[2]), via which no synchronization packet (D1[2], D2[1], D2[2], D3[1]) is received, a network time deviation [td10[1], td30[2]) of zero is specified.

4. Method according to any of claims 1 to 3, **characterized in that** the participants (11, 12, 13) correct the network time deviation (td10[1], td20[1], td20[2], td30[2]) of the ports (11[2], 12[1], 12[2], 13[1]), via which a synchronization packet (D1[2], D2[1], D2[2], D3[1]) is received by a signal propagation time (tt1[2], tt2[1], tt2[2], tt3[1]) of the received synchronization packet (D1[2], D2[1], D2[2], D3[1]).

5. Method according to claim 4, **characterized in that** the participants (11, 12, 13) each transmit the difference time (td1[2], td2[1], td2[2], td3[1]) of the ports, via which the respective synchronization packet (D1[2], D2[1], D2[2], D3[1]) is sent, with the synchronization packet (D1[2], D2[1], D2[2], D3[1]), **and that** the participants (11, 12, 13) calculate the signal propagation time (tt1[2], tt2[1], tt2[2], tt3[1]) of the received synchronization packet (D1[2], D2[1], D2[2], D3[1]) from the difference time (td1[2], td2[1], td2[2], td3[1]) received with the synchronization packet (D1[2], D2[1], D2[2], D3[1]) and the difference time (td1[2], td2[1], td2[2], td3[1]) of the port, via which the synchronization packet (D1[2], D2[1], D2[2], D3[1]) is received.

6. Method according to claim 5, **characterized in that** the participants (11, 12, 13) calculate the signal propagation time (tt1[2], tt2[1], tt2[2], tt3[1]) of the received synchronization packet (D1[2], D2[1]), D2[2], D3[1]) from half the difference of the difference time (td1[2], td2[1], td2[2], td3[1]) received with the synchronization packet (D1[2], D2[1], D2[2], D3[1]) and the difference time (td1[2], td2[1], td2[2], td3[1]) of the port, via which the synchronization packet (D1[2], D2[1], D2[2], D3[1]) is received.

7. Method according to any of claims 1 to 6, **characterized in that** the participants (11, 12, 13) calculate and preferably filter a network time deviation difference, in each case from an instantaneous network time deviation (td10[1], td20[1], td20[2], td30[2]) in an instantaneous cycle and a network time deviation (td10[1], td20[1], td20[2], td30[2]) from a previous cycle, **and that** the calculated and preferably filtered network time deviation difference is added to the current network time deviation (td10[1], td20[1]), td20[2], td30[2]) in the instantaneous cycle in order to obtain a corrected network time deviation difference, **and that** the corrected network time deviation difference replaces the original instantaneous network time deviation (td10[1], td20[1], td20[2], td30[2]).

8. Method according to any of claims 1 to 7, **characterized in that** the difference time (td1[2], td2[1], td2[2], td3[1]) is filtered in each case, wherein a filter with an exponential smoothing function is preferably used for this purpose.

9. Method according to any of claims 1 to 8, **characterized in that** when the specified synchronization master (SM) ceases, another participant (11, 12, 13) is specified as the new synchronization master (SM).

10. Method according to any of claims 1 to 9, **characterized in that** the participants (11, 12, 13) of the real-time network (1) are linearly connected to one another.

11. Method according to any of claims 1 to 10, **characterized in that** the participants (11, 12, 13) each have two ports (11[1], 11[2], 12[1], 12[2], 13[1], 13[2]).

12. Method according to any of claims 1 to 11, **characterized in that** that the synchronization packets (D1[2], D2[1], D2[2], D3[1]) are transmitted in ISO-OSI layer 2.

13. Method according to any of claims 1 to 12, **characterized in that** the real-time network (1) represents a serial real-time network, which participants are connected to one another via switches

14. Real-time network (1) comprising a number of participants (11, 12, 13), which are connected to one another via ports (11[1], 11[2], 12[1], 12[2], 13[1], 13[2]), wherein the participants (11, 12, 13) are configured to send synchronization packets (D1[2], D2[1], D2[2], D3[1]) to connected participants (11, 12, 13), wherein a participant (11, 12, 13) of the real-time network (1) is designated as the synchronization master (SM), wherein the other participants (11, 12, 13) are configured to derive their local network time (tn1, tn2, tn3) from a respective local time (t1, t2, t3) each of the participants (11, 12, 13) has, and to synchronize their local network time (tn1, tn2, tn3) with the local network time (tn1, tn2, tn3) of the synchronization master (SM), using the synchronization packets (D1[2], D2[1], D2[2], D3[1]), wherein the participants (11, 12, 13) are arranged along a synchronization path (S) to synchronize the local network time (tn1, tn2, tn3) of the participants (11, 12, 13) along the synchronization path (S) with the local network time (tn1, tn2, tn3) of the synchronization master (SM) using the synchronization packets (D1[2], D2[1], D2[2], D3[1]) starting from the synchronization master (SM) along the synchronization path (S) **characterized in that** the participants (11, 12, 13) are configured to transmit a time stamp of their local time (t1, t2, t3) with the synchronization packet (D1[2], D2[1], D2[2], D3[1]) at the time of sending the respective synchronization packet (D1[2], D2[1], D2[2], D3 [1), **and in that** the the participants (11, 12, 13) are configured to calculate a difference time (td1[2], td2[1], td2[2], td3[1]) for a port (11[2], 12[1], 12[2], 13[1]), via which a synchronization packet (D1[2], D2[1], D2[2], D3[1]) is received, from a difference between the time stamp received in the synchronization packet (D1[2], D2[1], D2[2], D3[1]) and a time stamp of their local time (t1, t2, t3) on receipt of the relevant synchronization packet (D1[2], D2[1], D2[2], D3[1]), to transmit a respective network time deviation (td10[1], td20[1], td20[2], td30[2]) of one of their other ports with the respective synchronization packet (D1[2], D2[1], D2[2], D3[1)), wherein the network time deviation (td10[1], td20[1], td20[2], td30[2]) of the ports (11[2], 12[1], 12[2], 13[1]), via which a synchronization packet (D1[2], D2[1], D2[2], D3[1]) is received, is in each case calculated as the sum of the calculated difference time (td1[2], td2[1], td2[2], td3[1]) and a network time deviation (td10[1], td20[1], td20[2], td30[2]) received in the synchronization packet (D1[2], D2[1], D2[2], D3[1]), and to calculate their local network time (tn1, tn2, tn3) from the difference between their local time (t1, t2, t3) and the network time deviation (td10[2], td20[1], td30[1]) of the port (11[2], 12[1], 12[2], 13[1]) arranged opposite the synchronization path (S), in the direction of the synchronization master, to synchronize the local network time (tn1, tn2, tn3).

## Revendications

1. Procédé de synchronisation d'une heure de réseau locale (tn1, tn2, tn3) respective d'abonnés (11, 12, 13) d'un réseau temps réel (1), les abonnés (11, 12, 13) présentant chacun une heure locale (t1, t2, t3) et l'heure de réseau locale (tn1, tn2, tn3) respective d'un abonné (11, 12, 13) étant déduite de l'heure locale (t1, t2, t3) respective, les abonnés (11, 12, 13) étant connectés les uns aux autres par l'intermédiaire de ports (11[1], 11[2], 12[1], 12[2], 13[1], 13[2]), les abonnés (11, 12, 13) transmettant chacun des paquets de synchronisation (D1[2], D2[1], D2[2], D3[1]) à des abonnés (11, 12, 13) connectés de préférence cycliquement, un abonné (11, 12, 13) du réseau temps réel (1) étant défini comme un maître de synchronisation (SM), l'heure de réseau locale (tn1, tn2, tn3) des autres abonnés (11, 12, 13) étant synchronisée sur l'heure de réseau locale (tn1, tn2, tn3) du maître de synchronisation (SM) en utilisant les paquets de synchronisation (D1[2], D2[1], D2[2], D3[1]), l'heure de réseau locale (tn1, tn2, tn3) des abonnés (11, 12, 13) se trouvant le long d'un chemin de synchronisation (S) étant synchronisée sur l'heure de réseau locale (tn1, tn2, tn3) du maître de synchronisation (SM) le long d'un chemin de synchronisation (S) en partant du maître de synchronisation (SM) en utilisant les paquets de synchronisation (D1[2], D2[1], D2[2], D3[1]), **caractérisé en ce que** les abonnés (11, 12, 13) transmettent, au moment de l'envoi du paquet de synchronisation (D1[2], D2[1], D2[2], D3[1]) respectif, un horodatage de leur heure locale (t1, t2, t3) avec le paquet de synchronisation (D1[2], D2[1], D2[2], D3[1]), que les abonnés (11, 12, 13) calculent, pour un port (11[2], 12[1], 12[2], 13[1]), par l'intermédiaire duquel un paquet de synchronisation (D1[2], D2[1], D2[2], D3[1]) est reçu, une différence de temps (td1[2], td2[1], td2[2], td3[1]) à partir d'une différence de l'horodatage reçu dans le paquet de synchronisation (D1[2], D2[1], D2[2], D3[1]) et d'un horodatage de leur heure locale (t1, t2, t3) lors de la réception du paquet de synchronisation (D1[2], D2[1], D2[2], D3[1]) concerné, que les abonnés (11, 12, 13) transmettent avec le paquet de synchronisation (D1[2], D2[1], D2[2], D3[1]) respectif chacun un écart d'heure de réseau (td10[1], td20[1], td20[2], td30[2]) d'un de leurs autres ports, les abonnés (11, 12, 13) calculant l'écart d'heure de réseau (td10[1], td20[1], td20[2], td30[2] des ports (11[2], 12[1], 12[2], 13[1]), par l'intermédiaire desquels un paquet de synchronisation (D1[2], D2[1], D2[2], D3[1]) est reçu respectivement en tant que la somme de la différence de temps (td1[2], td2[1], td2[2], td3[1]) calculée et d'un écart d'heure de réseau (td10[1], td20[1], td20[2], td30[2]) reçu dans le paquet de synchronisation (D1[2], D2[1], D2[2], D3[1]), et que les abonnés (11, 12, 13) calculent leur heure de réseau locale (tn1, tn2, tn3) à partir de la différence de leur heure locale (t1, t2, t3) et l'écart d'heure de réseau (td10[2], td20[1], td30[1]) du port (11[2], 12[1], 12[2], 13[1]) disposé à l'opposé du chemin de synchronisation (S) en direction du maître de synchronisation, l'heure de réseau locale (tn1, tn2, tn3) des abonnés étant synchronisée.

2. Procédé selon la revendication 1, **caractérisé en ce qu'**un chemin de synchronisation (S) s'étendant sur les autres abonnés (11, 12, 13) est spécifié en partant du maître de synchronisation (SM), et que l'heure de réseau locale (tn1, tn2, tn3) des autres abonnés (11, 12, 13) est synchronisée sur l'heure de réseau locale (tn1, tn2, tn3) du maître de synchronisation (SM) le long du chemin de synchronisation (S).

3. Procédé selon la revendication 2, **caractérisé en ce que** le maître de synchronisation (SM) transmet respectivement un écart d'heure de réseau [td10[1], td30[2]) spécifié le long du chemin de synchronisation (S) avec le paquet de synchronisation (D1[2], D3[1]), et que pour des ports (11[1], 13[2]), par l'intermédiaire desquels aucun paquet de synchronisation (D1[2], D2[1], D2[2], D3[1]) n'est reçu, un écart d'heure de réseau [td10[1], td30[2]) de zéro est spécifié.

4. Procédé selon l'une quelconque des revendications 1 à 3, **caractérisé en ce que** les abonnés (11, 12, 13) corrigent l'écart d'heure de réseau (td10[1], td20[1], td20[2], td30[2]) des ports (11[2], 12[1], 12[2], 13[1]), par l'intermédiaire desquels un paquet de synchronisation (D1[2], D2[1], D2[2], D3[1]) est reçu, pour corriger un temps de propagation de signal (tt1[2], tt2[1], tt2[2], tt3[1]) du paquet de synchronisation (D1[2], D2[1], D2[2], D3[1]) reçu.

5. Procédé selon la revendication 4, **caractérisé en ce que** les abonnés (11, 12, 13) transmettent chacun avec le paquet de synchronisation (D1[2], D2[1], D2[2], D3[1]) la différence de temps (td1[2], td2[1], td2[2], td3[1]) des ports, par l'intermédiaire desquels le paquet de synchronisation (D1[2], D2[1], D2[2], D3[1]) respectif est envoyé, et que les abonnés (11, 12, 13) calculent le temps de propagation de signal (tt1[2], tt2[1], tt2[2], tt3[1]) du paquet de synchronisation (D1[2], D2[1], D2[2], D3[1]) reçu à partir de la différence de temps (td1[2], td2[1], td2[2], td3[1]) reçue avec le paquet de synchronisation (D1[2], D2[1], D2[2], D3[1]) et de la différence de temps (td1[2], td2[1], td2[2], td3[1]) du port, par l'intermédiaire duquel le paquet de synchronisation (D1[2], D2[1], D2[2], D3[1]) est reçu.

6. Procédé selon la revendication 5, **caractérisé en ce que** les abonnés (11, 12, 13) calculent le temps de propagation de signal (tt1[2], tt2[1], tt2[2], tt3[1]) du paquet de synchronisation (D1[2], D2[1], D2[2], D3[1]) reçu à partir de la différence divisée par deux entre la différence de temps (td1[2], td2[1], td2[2], td3[1]) reçue avec le paquet de synchronisation (D1[2], D2[1], D2[2], D3[1]) et la différence de temps (td1[2], td2[1], td2[2], td3[1]) du port, par l'intermédiaire duquel le paquet de synchronisation (D1[2], D2[1], D2[2], D3[1]) est reçu.

7. Procédé selon l'une des revendications 1 à 6, **caractérisé en ce que** les abonnés (11, 12, 13) calculent chacun et filtrent de préférence une différence d'écart d'heure de réseau à partir d'un écart d'heure de réseau actuel (td10[1], td20[1], td20[2], td30[2]) dans un cycle actuel et d'un écart d'heure de réseau (td10[1], td20[1], td20[2], td30[2]) d'un cycle précédent, et que la différence d'écart d'heure de réseau calculée et de préférence filtrée est ajoutée à l'écart d'heure de réseau actuel (td10[1], td20[1], td20[2], td30[2]) dans le cycle actuel pour obtenir une différence d'écart d'heure de réseau corrigée, un filtre avec une fonction de lissage exponentiel étant de préférence utilisé, et que la différence d'écart d'heure de réseau corrigée remplace l'écart d'heure de réseau actuel d'origine (td10[1], td20[1], td20[2], td30[2]).

8. Procédé selon l'une quelconque des revendications 1 à 7, **caractérisé en ce que** la différence de temps (td1[2], td2[1], td2[2], td3[1]) est respectivement filtrée, un filtre avec une fonction de lissage exponentiel étant de préférence utilisé.

9. Procédé selon l'une quelconque des revendications 1 à 8, **caractérisé en ce qu'**en cas de panne du maître de synchronisation (SM) fixé, un autre abonné (11, 12, 13) est fixé comme nouveau maître de synchronisation (SM).

10. Procédé selon l'une quelconque des revendications 1 à 9, **caractérisé en ce que** les abonnés (11, 12, 13) du réseau temps réel (1) sont connectés linéairement les uns aux autres.

11. Procédé selon l'une quelconque des revendications 1 à 10, **caractérisé en ce que** les abonnés (11, 12, 13) présentent chacun deux ports (11[1], 11[2], 12[1], 12[2], 13[1], 13[2]).

12. Procédé selon l'une des revendications 1 à 11, **caractérisé en ce que** les paquets de synchronisation (D1[2], D2[1], D2[2], D3[1]) sont transmis dans la couche 2 ISO-OSI.

13. Procédé selon l'une des revendications 1 à 12, **caractérisé en ce que** le réseau temps réel (1) représente un réseau temps réel série dont les abonnés sont connectés entre eux par l'intermédiaire de commutateurs.

14. Réseau temps réel (1) comprenant un certain nombre d'abonnés (11, 12, 13), qui sont connectés les uns aux autres par l'intermédiaire de ports (11[1], 11[2], 12[1], 12[2], 13[1], 13[2]), les abonnés (11, 12, 13) étant configurés pour transmettre chacun des paquets de synchronisation (D1[2], D2[1], D2[2], D3[1]) aux abonnés (11, 12, 13) connectés, un abonné (11, 12, 13) du réseau temps réel (1) étant défini comme maître de synchronisation (SM), les autres abonnés (11, 12, 13) étant configurés pour déduire à partir d'une heure locale (t1, t2, t3), que les abonnés (11, 12, 13) présentent chacun, leur heure de réseau locale (tn1, tn2, tn3) et pour synchroniser, en utilisant les paquets de synchronisation (D1[2], D2[1], D2[2], D3[1]), leur heure de réseau locale (tn1, tn2, tn3) sur l'heure de réseau locale (tn1, tn2, tn3) du maître de synchronisation (SM), les participants (11, 12, 13) étant disposés le long d'un chemin de synchronisation (S) pour synchroniser l'heure de réseau locale (tn1, tn2, tn3) sur l'heure de réseau locale (tn1, tn2, tn3) du maître de synchronisation (SM) le long d'un chemin de synchronisation (S) en partant du maître de synchronisation (SM) en utilisant les paquets de synchronisation (D1[2], D2[1], D2[2], D3[1]), **caractérisé en ce que** les abonnés (11, 12, 13) sont configurés pour transmettre avec le paquet de synchronisation (D1[2], D2[1], D2[2], D3[1]), au moment de l'envoi du paquet de synchronisation (D1[2], D2[1], D2[2], D3[1]) respectif, un horodatage de leur heure locale (t1, t2, t3), et que les abonnés (11, 12, 13) sont configurés pour calculer, pour un port (11[2], 12[1], 12[2], 13[1]), par l'intermédiaire duquel un paquet de synchronisation (D1[2], D2[1], D2[2], D3[1]) est reçu, une différence de temps (td1[2], td2[1], td2[2], td3[1]) à partir d'une différence de l'horodatage reçu dans le paquet de synchronisation (D1[2], D2[1], D2[2], D3[1]) et d'un horodatage de leur heure locale (t1, t2, t3) lors de la réception du paquet de synchronisation (D1[2], D2[1], D2[2], D3[1]) concerné, pour transmettre, avec le paquet de synchronisation (D1[2], D2[1], D2[2], D3[1]) respectif chacun un écart d'heure de réseau (td10[1], td20[1], td20[2], td30[2]) d'un de leurs autres ports, l'écart d'heure de réseau (td10[1], td20[1], td20[2], td30[2]) des ports (11[2], 12[1], 12[2], 13[1]), par l'intermédiaire desquels un paquet de synchronisation (D1[2], D2[1], D2[2], D3[1]) est reçu, étant calculé respectivement en tant qu'une somme de la différence de temps (td1[2], td2[1], td2[2], td3[1]) calculée et d'un écart d'heure de réseau (td10[1], td20[1], td20[2], td30[2]) reçu dans le paquet de synchronisation (D1[2], D2[1], D2[2], D3[1]), pour calculer leur heure de réseau locale (tn1, tn2, tn3) à partir de la différence de leur heure locale (t1, t2, t3) et de l'écart d'heure de réseau (td10[2], td20[1], td30[1]) du port (11[2], 12[1], 12[2], 13[1]) disposé à l'opposé du chemin de synchronisation (S), en direction du maître de synchronisation pour synchroniser l'heure de réseau locale (tn1, tn2, tn3).
